# EUROPEAN PATENT APPLICATION

(11) **EP 1 752 617 A2**
(43) Date of publication of application: **14.02.2007**
(21) Application number: 06253866.5
(22) Date of filing: 24.07.2006
(51) Int. Cl.: F01K 21/04

(54) **Combined cycle power plant**

(30) Priority: 25.07.2005 US 161137
(71) Applicant: General Electric Company, Schenectady, NY 12345 (US)
(72) Inventor: Smith, Raub W., Ballston Lake New York 12019 (US); Gulen, Can, Niskayuna New York 12309 (US); Ranasinghe, Jatila, Simpsonville South Carolina 29681 (US)
(74) Representative: Bedford, Grant Richard

(57) **Abstract**

A combined cycle power plant (100) including a gas turbine (12), a steam turbine (18), and a heat recovery steam generator (32). The power plant (100) also includes a feedwater heater (120) positioned downstream of the steam turbine (18) and a fuel moisturization system (130, 140) in communication with the heat recovery steam generator (32).

## Description

The present invention relates generally to a gas fired combined cycle power plant and more particularly relates to a modified bottoming cycle for improved output and efficiency.

A combined cycle power plant utilizes a gas turbine and a steam turbine in combination to produce power. The power plant is arranged such that the gas turbine is thermally connected to the steam turbine through a heat recovery steam generator ("HRSG"). The HRSG is a non-contact heat exchanger that allows feedwater for the steam generation process to be heated by otherwise wasted gas turbine exhaust gases. The HRSG is a large duct with tube bundles interposed therein such that water is heated to steam as the exhaust gases pass through the duct. The primary efficiency of the combined cycle arrangement is the utilization of the otherwise wasted gas turbine exhaust gases.

Modern combined cycles typically employ two (2) or three (3) steam generation pressures to recover the maximum energy from the gas turbine exhaust. These cycles also often include water supply temperature controls to maintain the tubes above the water dew point so as to avoid potential corrosion. Such cycles may optimize to HRSG exit gas temperatures as low as about 150° Fahrenheit (about 66° Celsius). In some instances, the customer may require a higher minimum HRSG exit gas temperature, for example so as to allow for a lower cost (shorter) stack. This minimum HRSG exit gas temperature constraint results in an unavoidable performance reduction because it requires the recovery of less exhaust energy to the steam. A higher HRSG exit gas temperature traditionally has been achieved by reduction of the low pressure surface area because the low pressure steam production thus sacrificed has the lowest potential to make work.

Thus, there is a desire for a combined cycle power plant that provides increased efficiency while meeting higher than optimum HRSG stack temperature requirements when needed.

The present application thus describes a combined cycle power plant including a gas turbine, a steam turbine, and a heat recovery steam generator. The power plant also includes a feedwater heater positioned downstream of the steam turbine and a fuel moisturization system in communication with the heat recovery steam generator.

The fuel moisturization system may include a fuel saturator and a fuel superheater. The power plant further may include a second feedwater heater and a turbine intercooler.

The present application further describes a method for operating a combined cycle power plant. The power plant includes a gas turbine operating on a fuel stream, a steam turbine, and a heat recovery steam generator. The method may include the steps of heating the water exiting the steam turbine prior to entering the heat recovery steam generator, adding water to the fuel stream, and heating the fuel stream entering the gas turbine.

The heating the water step may include heating the water in a feedwater heater and/or in a turbine intercooler. The adding water step may include adding water to the fuel stream in a fuel saturator. The heating the fuel step may include heating the fuel in a fuel superheater. The method further may include the step of further heating the water prior to entering the heat recovery steam generator. The further heating the water step may include heating the water in a turbine intercooler.

The present application further describes a combined cycle power plant. The power plant may include a gas turbine, a steam turbine, a heat recovery steam generator, a feedwater heater positioned down stream of the steam turbine, and a fuel moisturization system in communication with the heat recovery steam generator. The fuel moisturization system may include a fuel saturator and a fuel superheater. The power plant further may include a second feedwater heater and/or a turbine intercooler. The heat recovery steam generator may include two, three, or more pressure sections.

Various features of the present invention will become apparent to one of ordinary skill in the art upon review of the following detailed description when taken in conjunction with the drawings and the appended claims, and in which:
Fig. 1 is a schematic representation of a prior art three pressure reheat bottoming cycle.
Fig. 2 is a schematic representation of a prior art three pressure reheat bottoming cycle with a feedwater heater for stack temperature control.
Fig. 3 is a schematic representation of a prior art three pressure reheat bottoming cycle with fuel moisturization.
Fig. 4 is a schematic representation of a two pressure reheat bottoming cycle with fuel moisturization and a feedwater heater for stack temperature control.
Fig. 5 is a schematic representation of a three pressure reheat bottoming cycle with fuel moisturization and a feedwater heater for stack temperature control.
Fig. 6 is a schematic representation of a three pressure reheat bottoming cycle with fuel moisturization and two feedwater heaters for dual fuel operation.
Fig. 7 is a schematic representation of an intercooled gas turbine with a three pressure reheat bottoming cycle and intercooled heat transfer to feedwater.
Fig. 8 is a schematic representation of an intercooled gas turbine with a three pressure reheat bottoming cycle, intercooled heat transfer to feedwater, and a feedwater heater for stack temperature control.
Referring now to the drawings, in which like numerals indicate like elements throughout the several views, Fig. 1 shows a known combined cycle power
   plant **10** with no stack temperature limit constraint. The power plant **10** includes a gas turbine system **12** with a combustion system **14** and a turbine **16.** The power plant **10** further includes a steam turbine system **18.** The steam turbine system **18** includes a high pressure section **20,** an intermediate pressure section **22,** and one or more low pressure sections **24** with multiple steam admission points at the different pressures. The low pressure section **24** exhausts into a condenser **26.** The steam turbine system **18** drives a generator **28** that produces electrical power. The gas turbine **12,** the steam turbine system **18,** and the generator **28** may be arranged on a single shaft **30.** Other configurations may be used.
   The steam turbine system **18** is associated with a multi-pressure HRSG **32.** The HRSG **32** is a counter flow heat exchanger such that as feedwater passes therethrough the water is heated as the exhaust gas gives up heat and becomes cooler. The HRSG **32** has three (3) different operating pressures (high, intermediate, and low) with means for generating steam at the various pressures and temperatures as vapor feed to the corresponding stages of the steam turbine system **18.** The HRSG **32** may include, for example, a lower pressure section **34,** an intermediate pressure section 36, and a high pressure section **38.** Each section **34, 36, 38** generally includes one or more economizers, evaporators, and superheaters.
   Condensate is fed from the condenser **26** to the HRSG **32** via one or more conduits **40** with the aid of a condensate pump **42.** A gland seal condenser **44** also may be used. The condensate subsequently passes through the low pressure section **34** of the HRSG **32.** In a known manner, steam from the low pressure section **34** is fed to the low pressure section **24** of the steam turbine system **18** via a conduit **46.** Condensate and/or feedwater pass through the intermediate section **36** and are returned to the intermediate pressure section **22** of the steam turbine system **18** via a conduit **48.** Finally, condensate is passed through the high pressure section **38** of the HRSG **32** and is returned
   to the high pressure section **20** of the steam turbine system **18** via a conduit **50.** Hot water produced via the HRSG **32** also may be used for a fuel heating system **52.**
   In this system, the HRSG exit temperature can be impacted by reducing the surface area within the low pressure section **34** of the HRSG **32,** either the evaporator and/or the economizer. The net effect is lower low pressure steam generation and total heat recovered to raise the temperature of the HRSG exit gas. In the case of a HRSG exit gas temperature limit, the performance loss is a matter of reduced low pressure steam production and more unrecovered exhaust energy escaping from the HRSG **32.**

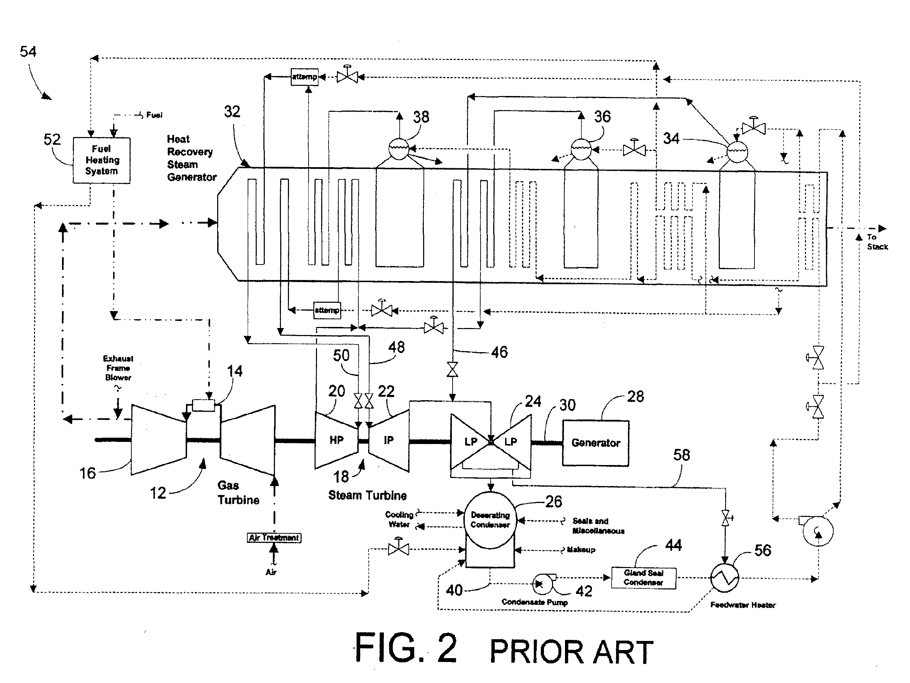

   Fig. 2 shows a further system, in this case a power plant **54.** The power plant **54** is largely identical to the power plant **10** described above but with the addition of a low pressure extraction feedwater heater **56.** The feedwater heater **56** is positioned about the conduit **40** downstream of the condenser **26.** A further conduit **58** may directly connect the feedwater heater **56** to the low pressure section **24** of the steam turbine system **18.** The use of the feedwater heater **56** represents the application of commonly owned U.S. Patent No. 4,841,722, which is incorporated herein by reference.
   The feedwater heater **56** selectively increases the supply temperature of the condensate to the HRSG **32.** Specifically, the feedwater heater **56** improves thermal performance by raising the supply water temperature rather than lowering the water temperature exiting into the low pressure steam drum of the low pressure section **34.** Higher output and efficiency are achieved because full low pressure steam generation is restored as is the work the steam produces as it expands through the low pressure section **24** of the steam turbine system **18.** Heat recovered to steam generation and rejected with the HRSG exit gas may be the same, although the use of the low pressure extraction steam to preheat the feedwater has the secondary benefit of reducing condenser heat rejection.

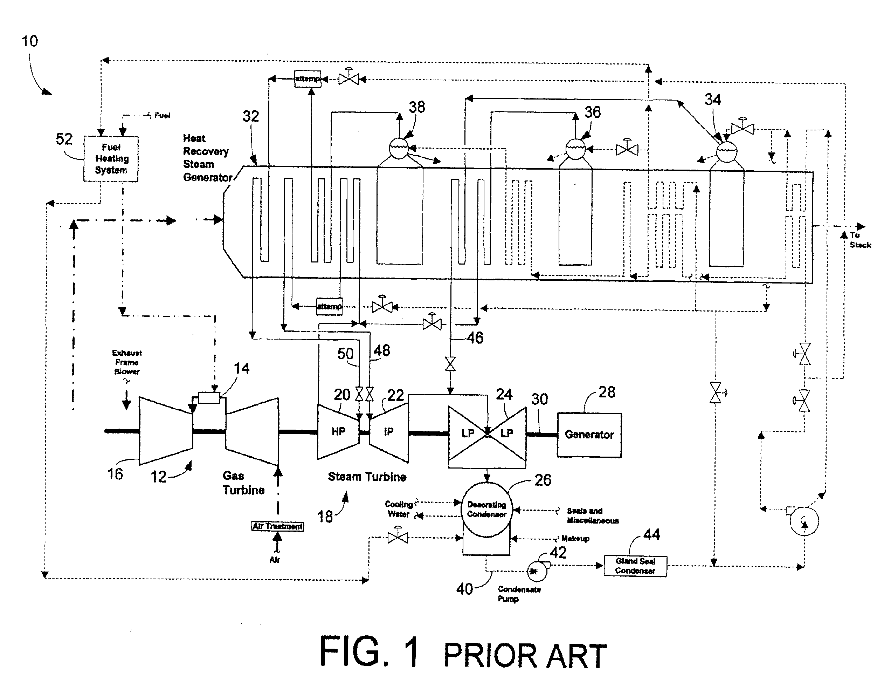

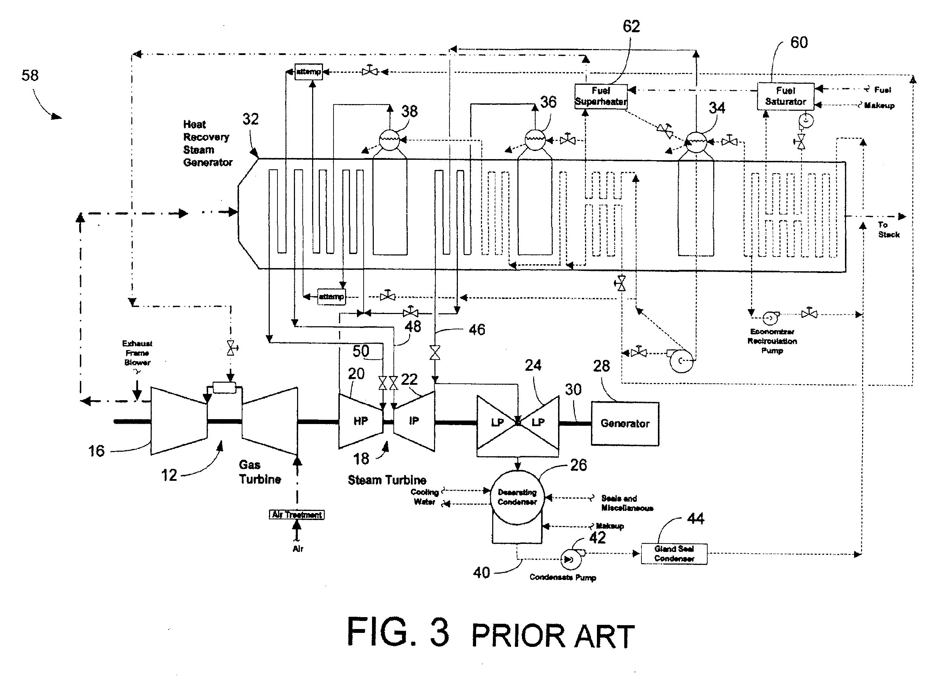

   Fig. 3 shows a further system, a power plant **58.** The power plant **58** is similar to that shown in the power plant **10** of Fig. 1 but with the addition of fuel moisturization techniques. Specifically, a fuel saturator **60** and a fuel superheater **62** may be used as a moisturization system. The fuel saturator **60** uses water heated from the low pressure section **34** of the HRSG **32** to saturate the fuel. The fuel superheater **62** then uses water from the intermediate section **36** to superheat the fuel before it reaches the combustion system **14** of the gas turbine system **12.** Fuel saturation is described in more detail in commonly owned U.S. Patent No. 6,389,794, incorporated herein by reference.
   If this system is applied without HRSG temperature limitations, the use of the fuel saturator **60** and the fuel superheater **62** lowers the HRSG temperatures below that achievable in the power plant **10** shown in Fig. 1. The structural cycle benefit of fuel moisturization, however, is actually less dependent on increased recovery of exhaust heat than on the fact that the low level heat recovered to the fuel is more valuable than the heat recovered to evaporate water for steam turbine admission.

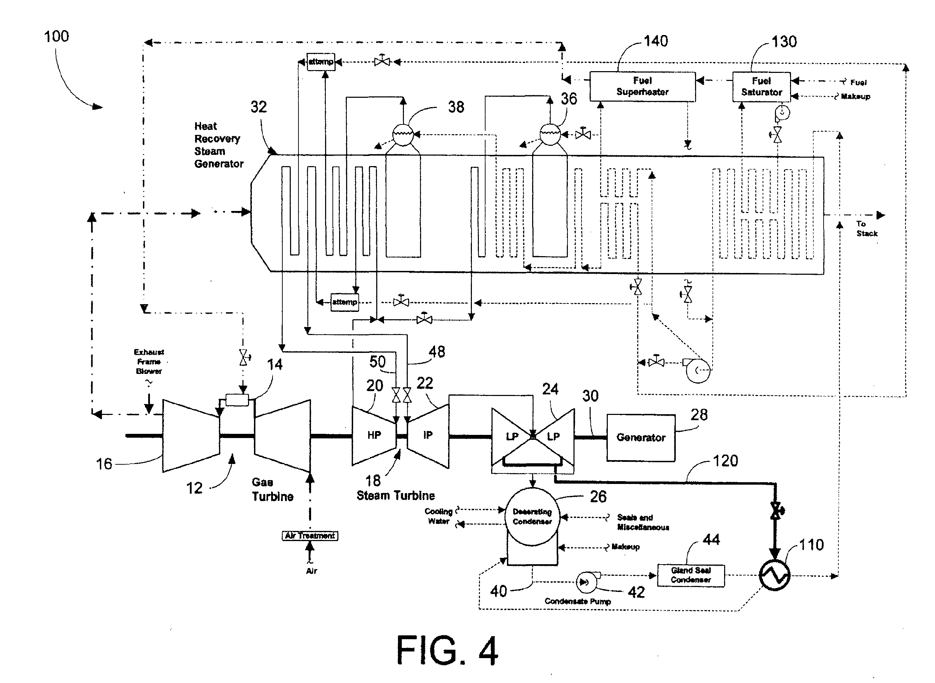

   Fig. 4 shows one embodiment of a power plant **100** as is described herein. The power plant **100** is similar to the power plant **58** but with the addition of a feedwater heater **110** and the removal of the lowest pressure section (formerly **36)** of the HRSG **32.** The feedwater heater **110** is similar to the feedwater heater **56** described above. The feedwater heater **110** is connected to the condenser **26** via the conduit **40** and connected to the low pressure section **24** of the steam turbine system **18** via a conduit **120.**
   The power plant **100** also includes a fuel moisturization system having a fuel saturator **130** and a fuel superheater **140.** The fuel saturator **130** is similar to the fuel saturator **60** described above and is situated within the low pressure section **36** (in this embodiment) of the two pressure HRSG **32.** Likewise, the fuel superheater **140** may be similar to the fuel superheater **62** described above and in communication with this low pressure section **36** of the HRSG **32.** As such, the boiler feedwater is heated with low pressure steam turbine extraction and water for fuel moisturization is heated as far as allowed by the stack temperature limit.

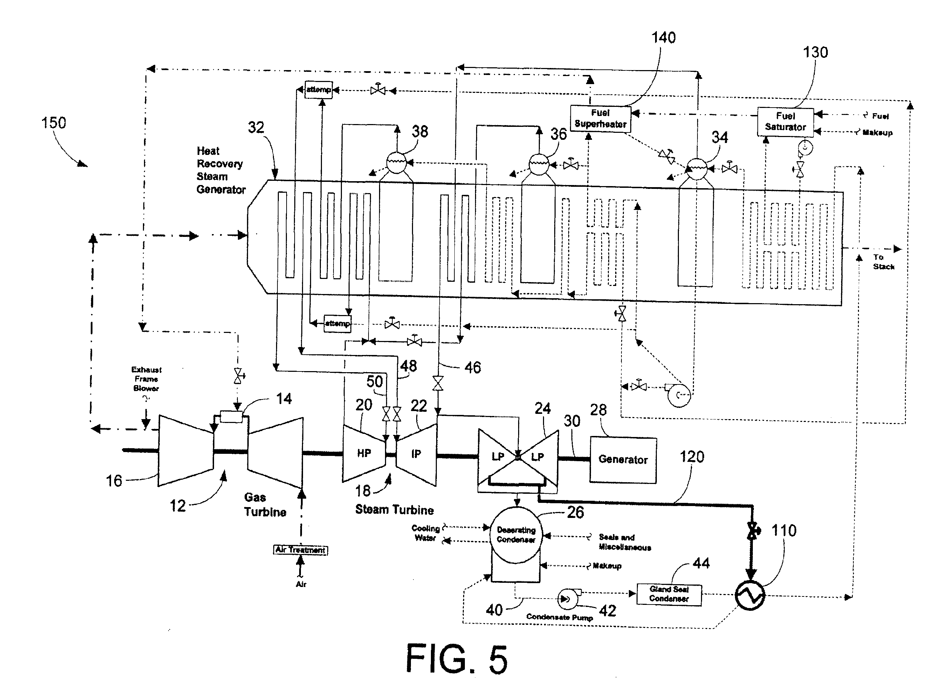

   Fig. 5 shows a slightly alternative embodiment, a power plant **150.** In this embodiment, the low pressure section **34** of the HRSG **32** is included to give a three (3) pressure cycle similar to Fig. 2. In comparing the systems of Figs. 4 and 5, the cycle of Fig. 5 has less output due to less moisture addition to the fuel, but the efficiency is slightly improved. The HRSG exit gas (stack) temperatures for the systems of Figs. 4 and 5 may be in the range of about 195° - 200° Fahrenheit (about 90.6° - 93.3° Celsius) as dictated by customer specific constraints whereas the HRSG exit gas temperature may be in the range of about 155° Fahrenheit (about 68.3° Celsius) for the system of Fig. 3.

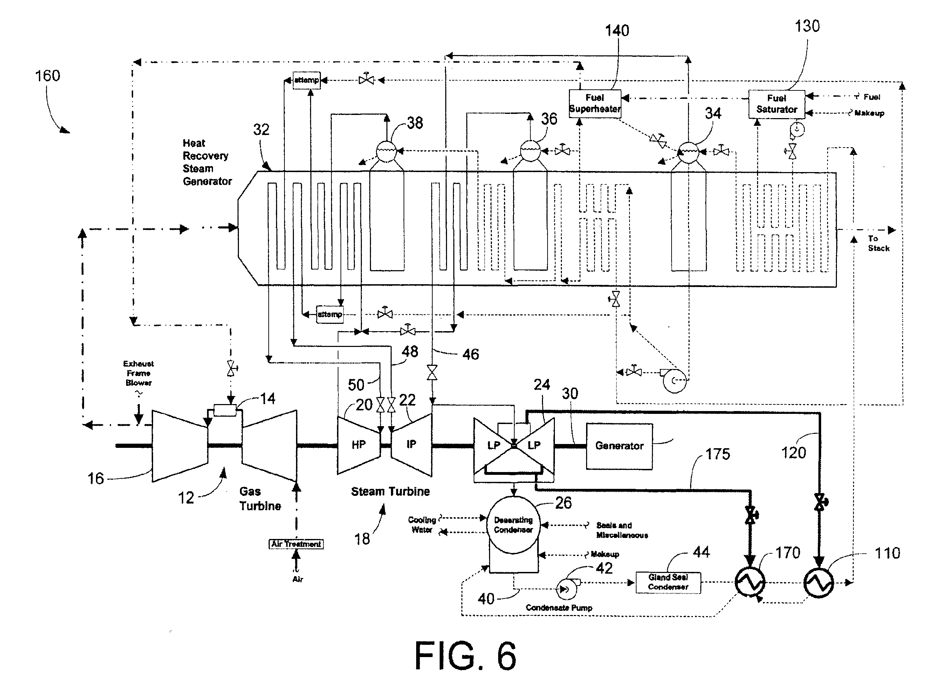

   Fig. 6 shows a further embodiment, a power plant **160.** The power plant **160** is similar to the power plant **150** of Fig. 5 but with the addition of a second feedwater heater **170.** This embodiment accommodates a dual gas/liquid fuel design. The second feedwater heater **170** may be of higher pressure to reach efficiently higher HRSG inlet water temperatures appropriate for fuel with a higher sulfur content. A further conduit **175** may be used herein. During liquid fuel operations, however, the moisturization circuit may be bypassed because the liquid fuel cannot be saturated with water. If liquid fuel operation is infrequent, the expense of the feedwater heater **170** may not be justified for the efficiency improvements it yields. In that case, the cycle of Fig. 5 may be used for dual fuel capacity with minor modifications. For example, an additional conduit may be added to the feedwater heater **110** from the low pressure section **24** of the steam turbine system **18.** The alternate higher pressure steam supply allows for the attainment of higher feedwater temperatures as appropriate for fuel with a higher sulfur content.

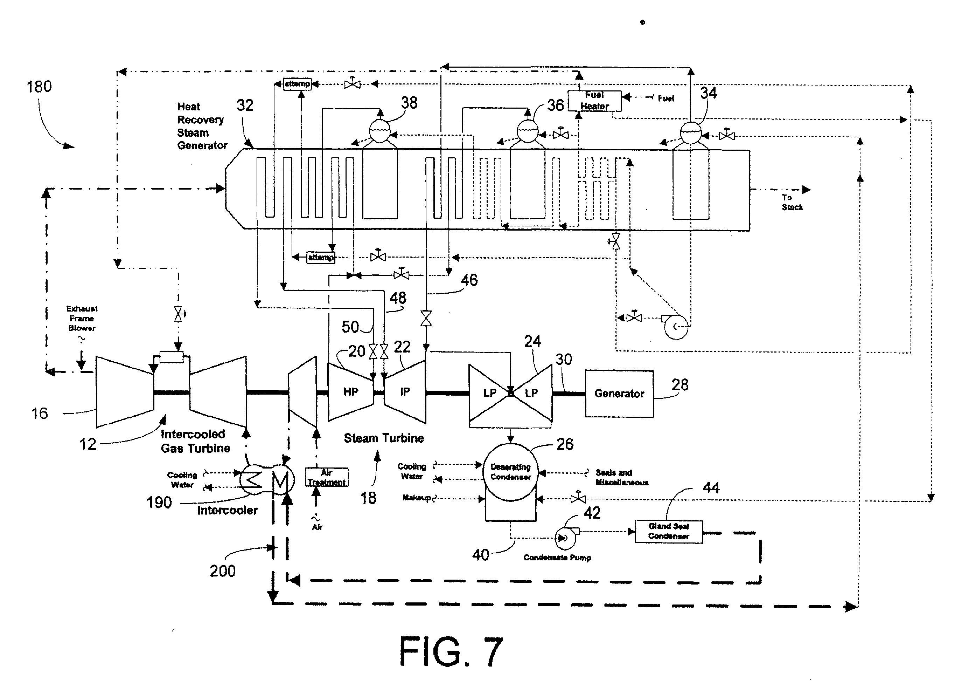

   Fig. 7 shows a further embodiment, a power plant **180.** The power plant **180** is similar to the power plant **10** but with the addition of a gas turbine compressor intercooler **190.** The intercooler **190** is a feature of some gas turbine designs that increases shaft output by decreasing compressor power consumption. The heat removed from the compressor by the intercooler **190** ordinarily is rejected to ambient. In this embodiment, the intercooler **190** is positioned in a circuit **200** with the condenser **26** downstream of the condensate pump **42.** As such, the temperature of the condensate supply to the HRSG **32** can be increased with no loss in cycle efficiency, *i.e.,* the intercooler **190** heat was to be rejected anyway. The use of the circuit **200** also has the benefit of decreasing the heat exchanger surface area required in the HRSG **32** as a whole.

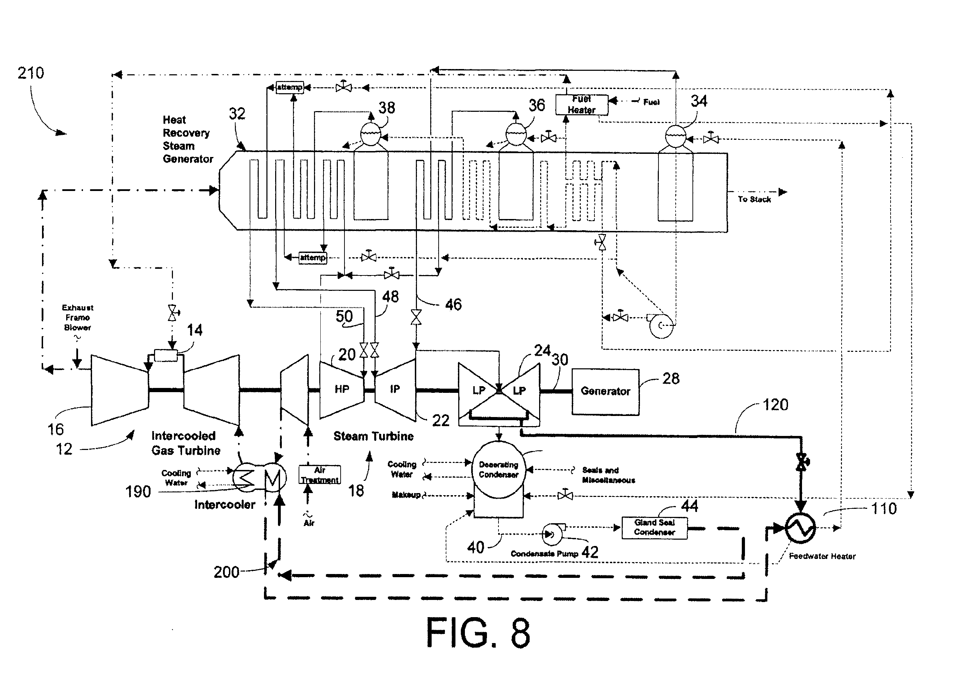

Fig. 8 shows a further embodiment, a power plant **210.** The power plant **210** is similar to the power plant **180** but with the addition of the feedwater heater **110.** If higher condensate supply temperatures are required, the feedwater heater **110** can be applied in series. This embodiment also adds efficient dual fuel flexibility to an intercooled gas turbine combined cycle.

Although the embodiments shown in Figs. 7 and 8 all show multi-pressure reheat steam cycles, it should be understood that the intercooled gas turbine bottoming cycles also may be non-reheat, have fewer pressure levels, or include fuel moisturization. The systems described herein are applicable to any other gas turbine configuration, including machines employing close circuit steam cooling and reheat combustion.

It should be understood that the foregoing relates only to the preferred embodiments of the present invention and that numerous changes and modifications may be made herein without departing from the general spirit and scope of the invention as defined by the following claims and the equivalents thereof.

### COMBINED CYCLE EFFICIENCY IMPROVEMENT WITH MINIMUM STACK TEMPERATURE CONSTRAINT

- **10**: combined cycle power plant
- **12**: gas turbine system
- **14**: combustion system
- **16**: gas turbine
- **18**: steam turbine system
- **20**: high pressure section
- **22**: intermediate pressure section
- **24**: low pressure section
- **26**: condenser
- **28**: generator
- **30**: shaft
- **32**: HRSG
- **34**: lower pressure section
- **36**: intermediate pressure section
- **38**: high pressure section
- **40**: conduit
- **42**: condensate pump
- **44**: gland seal condenser
- **46**: conduit
- **48**: conduit
- **52**: fuel heating system
- **54**: power plant
- **56**: feedwater heater
- **58**: conduit
- **60**: fuel saturator
- **62**: fuel superheater
- **100**: power plant
- **110**: feedwater heater

- **120**: conduit
- **130**: fuel saturator
- **140**: fuel superheater
- **150**: power plant
- **160**: power plant
- **170**: second feedwater heater
- **175**: conduit
- **180**: power plant
- **190**: innercooler
- **200**: circuit
- **210**: power plant

## Claims

1. A combined cycle power plant (100) including a gas turbine (12), a steam turbine (18), and a heat recovery steam generator (32), comprising:
a feedwater heater (110) positioned downstream of the steam turbine (18); and
a fuel moisturization system (130, 140) in communication with the heat recovery steam generator (32).

2. The combined cycle power plant (100) of claim 1, wherein the fuel moisturization system (130, 140) comprises a fuel saturator (130).

3. The combined cycle power plant (100) of claim 1 or claim 2, wherein the fuel moisturization system (130, 140) comprises a fuel superheater (140).

4. The combined cycle power plant (100) of any preceding claim, further comprising a second feedwater heater (170).

5. The combined cycle power plant (100) of any preceding claim, further comprising a turbine intercooler (190).

6. A method for operating a combined cycle power plant (100) including a gas turbine (12) operating on a fuel stream, a steam turbine (18), and a heat recovery steam generator (32), comprising:
heating the water exiting the steam turbine (18) prior to entering the heat recovery steam generator (32);
adding water to the fuel stream; and
heating the fuel stream entering the gas turbine (12).

7. The method of claim 6, wherein the heating the water step comprises heating the water in a feedwater heater (120).

8. The method of claim 6 or claim 7, wherein the adding water step comprises adding water to the fuel stream in a fuel saturator.

9. The method of any one of claims 6 to 8, wherein the heating the fuel step comprises heating the fuel in a fuel superheater (130).

10. The method of any one of claims 6 to 9, wherein the heating the water step comprises heating the water in a turbine intercooler (190).

11. The method of any one of claims 6 to 10, further comprising the step of further heating the water prior to entering the heat recovery steam generator (32).

12. The method of claim 11, wherein the further heating the water step comprises heating the water in a turbine intercooler (190).
